# EUROPEAN PATENT APPLICATION

(11) **EP 4 524 203 A1**
(43) Date of publication of application: **19.03.2025**
(21) Application number: 24783547.3
(22) Date of filing: 22.01.2024
(51) Int. Cl.: C08L 81/02, C08K 9/06, C08K 3/22, C08L 83/04

(54) **POLY(PHENYLENE SULFIDE)-BASED MAGNETIC MATERIAL AS WELL AS PREPARATION METHOD THEREFOR AND USE THEREOF**

(30) Priority: 28.07.2023 CN 202310938929
(71) Applicant: Hengdian Group DMEGC Magnetics Co., Ltd., Jinhua, Zhejiang 322118 (CN)
(72) Inventor: HU, Jiangping, Jinhua, Zhejiang 322118 (CN); JIN, Zhihong, Jinhua, Zhejiang 322118 (CN)
(74) Representative: Buzzi, Notaro & Antonielli d'Oulx S.p.A.
(86) International application number: PCT/CN2024/073491
(87) International publication number: WO 2025/025536

(57) **Abstract**

Provided are a poly(phenylene sulfide)-based magnetic material, a preparation method therefor, and an application thereof, and the poly(phenylene sulfide)-based magnetic material includes a linear poly(phenylene sulfide), a magnetic powder, a phenyl silicone resin, a hyperbranched poly(phenylene sulfide), and a lubricant. In the present application, the bonding force of the magnetic powder with the poly(phenylene sulfide) at high temperature is improved by adding the phenyl silicone resin, the structure of the linear poly(phenylene sulfide) is modified by adding the hyperbranched poly(phenylene sulfide) to increase the strength and toughness of the poly(phenylene sulfide)-based magnetic material, and the fluidity is improved by adding the lubricant, so that the prepared poly(phenylene sulfide)-based magnetic material has the characteristics of high strength, good toughness, and good fluidity.

## Description

### TECHNICAL FIELD

The present application relates to the technical field of injection-molded magnetic materials, such as a poly(phenylene sulfide)-based magnetic material, a preparation method therefor, and an application thereof.

### BACKGROUND

Injection-molded magnets are one important branch of bonded magnets, which have the advantages of high dimensional accuracy, and good mechanical properties, and can be used to prepare magnets in complex shapes for multi-pole magnetization, and are widely used in the fields of household electrical appliances, automobiles, communication equipment, testing instruments, computers, office equipment, and so on. Injection-molded magnetic materials for injection magnets are mainly obtained by subjecting magnetic powder, a polymer binder, and an additive in a certain proportion to mixing and granulation. In order to ensure the magnetic properties, injection-molded magnets are required to increase the amount of magnetic powder as much as possible (the mass fraction is generally greater than 82%, and even up to 90% is required), which will lead to the deterioration of molding-processability and mechanical property of injection-molded magnetic material, thus restricting its application. Especially, the poly(phenylene sulfide) material has the disadvantage of high brittleness compared to the nylon material, and a high filling proportion of magnetic powder will enlarge this disadvantage, so that the final product of the injection molded magnet will be prone to problems such as brittle cracking in the application, which will seriously affect its application. At present, researches about toughening poly(phenylene sulfide) injection-molded magnetic materials are very rare, and in general the toughness of the materials is improved only by modifying poly(phenylene sulfide) with elastomers. In poly(phenylene sulfide)-based injection-molded magnetic composites, the compatibility between poly(phenylene sulfide) and the elastomer is poor, easily leading to problems such as weak bonding and poor uniformity in composite materials.

CN105885415A discloses a preparation method for a high-toughness poly(phenylene sulfide)/ferrite composite material. The specific steps of the method are: firstly, poly(phenylene sulfide) is used as a matrix resin and subjected to granulation with a toughening agent and a lubricant together by the twin-screw extruder to prepare multifunctional masterbatch; and then ferrite magnetic powder treated with a coupling agent and the multifunctional masterbatch are subjected to mixing and granulation by the twin-screw extruder to obtain the high-toughness poly(phenylene sulfide)/ferrite composite. The toughening agent comprises any one or a combination of at least two of an ethylene-propylene-diene monomer, an ethylene-octene copolymer, a maleic-anhydride-grafted ethylene-propylene-diene monomer, and a maleic-anhydride-grafted ethylene-octene copolymer. In the method provided by this technical solution, firstly, the multifunctional masterbatch is prepared, which is conducive to dispersing each component well and improving the molding-processability of the poly(phenylene sulfide)/ferrite composite material; secondly, the use of elastomer as a toughening agent effectively improves the toughness of the composite material, the toughness of the prepared poly(phenylene sulfide)/ferrite composite material has been greatly improved, and the molding-processability and the magnetic properties are excellent. However, the elastomer as a toughening agent has a high viscosity, which improves the toughness of the material but also reduces the fluidity and the strength of the material, leading to a reduction in magnetic properties.

CN106317874A discloses a high-performance poly(phenylene sulfide)/ferrite magnetic composite material and a preparation method therefor. The preparation method comprises the following steps: nano-scale ferrite powder and micro-scale ferrite powder are subjected to coupling treatment with a coupling agent, and then added to the extruder having an ultrasonic dispersing device for granulation together with a poly(phenylene sulfide) resin and a lubricant to obtain the high-performance poly(phenylene sulfide)/ferrite magnetic composite material. The high-performance poly(phenylene sulfide)/ferrite magnetic composite material provided in this technical solution has the strength improved by adding the nano-scale ferrite powder to the micro-scale ferrite magnetic powder, which has the characteristic of easy molding and processing, the products have high mechanical strength, high-temperature resistance, corrosion resistance, and high magnetic properties, and the production process is simple to operate and easy to be industrialized. The addition of the nanoscale ferrite will be conducive to improving the filling degree of the magnet, but with the addition of the nanoscale ferrite, the overall specific surface area of the magnetic powder will increase, and the usage amount of the polymer material for coating the magnetic powder will increase, resulting in lower fluidity of the magnet with the same magnetic powder ratio. At the same time, the nanoscale ferrite is prone to agglomeration, which will affect the final performance of the magnet.

In order to achieve high performance, for the use of injection-molded magnetic materials, especially anisotropic injection molding magnets, the magnets are required to be oriented during the injection molding process, and thus the fluidity of the injection-molded magnetic material is important, and the reduction of fluidity will affect the performance of injection-molded magnets.

Therefore, it is necessary to develop a poly(phenylene sulfide)-based magnetic material with a high strength, high toughness, and good fluidity.

### SUMMARY

The following is a summary of subject matter that is described in detail herein. This summary is not intended to be limiting as to the scope of the claims.

The present application provides a poly(phenylene sulfide)-based magnetic material, a preparation method therefor, and an application thereof. The poly(phenylene sulfide)-based magnetic material has the characteristics of high strength, high toughness, and good fluidity.

In a first aspect, the present application provides a poly(phenylene sulfide)-based magnetic material, and the poly(phenylene sulfide)-based magnetic material comprises a linear poly(phenylene sulfide), a magnetic powder, a phenyl silicone resin, a hyperbranched poly(phenylene sulfide), and a lubricant.

In the present application, by adding the hyperbranched poly(phenylene sulfide), the crystal structure of the linear poly(phenylene sulfide) is improved, and the mechanical properties of the poly(phenylene sulfide)-based magnetic material is increased; furthermore, the molecule of the added hyperbranched poly(phenylene sulfide) is in the shape of spheres, which can play the role of plasticizers to improve the toughness of the linear poly(phenylene sulfide) matrix material, thus improving the toughness of the poly(phenylene sulfide)-based magnetic material. The phenyl silicone resin has high compatibility with poly(phenylene sulfide), which can effectively improve the binding force between the magnetic powder and poly(phenylene sulfide), and the addition of the high temperature-resistant lubricant improves the fluidity of the poly(phenylene sulfide)-based magnetic material.

In one embodiment, the linear poly(phenylene sulfide) has a melt flow rate of 500-3000 g/10min, such as 500 g/10min, 800 g/10min, 1000 g/10min, 1500 g/10min, 1800 g/10min, 2000 g/10min, 2500 g/10min, 2800 g /10min, or 3000 g/10min, and optionally, 1500-2500 g/10min.

In the present application, the melt flow rate is tested under the test condition of 316°C and 5 kg with reference to ISO 1133.

In one embodiment, the magnetic powder comprises ferrite magnetic powder and/or rare earth magnetic powder.

In one embodiment, the ferrite magnetic powder comprises strontium ferrite magnetic powder and/or barium ferrite magnetic powder.

In one embodiment, the rare earth magnetic powder comprises samarium iron nitride magnetic powder.

In one embodiment, the phenyl silicone resin comprises a phenyl silicone resin containing ethoxy and methyl.

In the present application, the phenyl silicone resin having ethoxy and methyl contains phenyl, ethoxy, and methyl in one molecule, and the ethoxy of high activity reacts with the magnetic powder, thus improving the bonding force of the magnetic powder and the poly(phenylene sulfide); the phenyl brings high compatibility between the phenyl silicone resin and poly(phenylene sulfide), which improves the bonding force of the magnetic powder and poly(phenylene sulfide); the methyl structure provides some lubricity, leading to a good enhancement to the fluidity of the magnetic powder.

In one embodiment, the hyperbranched poly(phenylene sulfide) is prepared by the monomer polymerization of dichlorothiophenol or dichlorothiophenol, the preparation method of which is available in the relevant documents.

In one embodiment, the hyperbranched poly(phenylene sulfide) has a weight-average molecular mass of 15000-30000, such as 15000, 16000, 18000, 20000, 21000, 23000, 25000, 28000, or 30000.

In one embodiment, the lubricant comprises a high temperature-resistant amide lubricant.

In the present application, the high temperature-resistant amide lubricant refers to a lubricant with a weight-loss rate of less than 10% tested at 350°C for 10 min.

In one embodiment, based on a total mass of the poly(phenylene sulfide)-based magnetic material being 100 parts, the linear poly(phenylene sulfide) is 10-18 parts by mass, such as 10 parts, 11 parts, 12 parts, 13 parts, 14 parts, 15 parts, 16 parts, 17 parts, or 18 parts.

In one embodiment, the magnetic powder is 80-100 parts by mass, such as 80 parts, 82 parts, 85 parts, 87 parts, 88 parts, 90 parts, 92 parts, 95 parts, or 100 parts, optionally 80-88 parts by mass.

In one embodiment, the phenyl silicone resin is 0.3-0.6 parts by mass, such as 0.3 parts, 0.35 parts, 0.4 parts, 0.45 parts, 0.5 parts, 0.55 parts, or 0.6 parts.

In one embodiment, the hyperbranched poly(phenylene sulfide) is 1-4 parts by mass, such as 1 part, 1.5 parts, 2 parts, 2.5 parts, 3 parts, 3.5 parts, or 4 parts.

In one embodiment, the lubricant is 0.5-1.0 parts by mass, such as 0.5 parts, 0.6 parts, 0.7 parts, 0.8 parts, 0.9 parts, or 1.0 part.

In a second aspect, the present application provides a preparation method for the poly(phenylene sulfide)-based magnetic material as described in the first aspect, and the preparation method comprises the following steps:
(1) mixing a magnetic powder and a phenyl silicone resin to obtain a surface-treated magnetic powder; and
(2) mixing the surface-treated magnetic powder obtained in step (1), a linear poly(phenylene sulfide), a hyperbranched poly(phenylene sulfide), and a lubricant, and performing granulation to obtain the poly(phenylene sulfide)-based magnetic material.

In one embodiment, the mixing in step (1) is to mix the magnetic powder and the phenyl silicone resin diluted with a solvent.

In one embodiment, the solvent comprises ethyl acetate and/or ethyl formate.

In one embodiment, a mass ratio of the phenyl silicone resin to the solvent is 1:3-1:6, such as 1:3, 1:3.5, 1:4, 1:4.5, 1:5, 1:5.5, or 1:6.

In one embodiment, the mixing in step (1) and step (2) is each independently performed at a temperature of 80-120°C, such as 80°C, 85°C, 90°C, 95°C, 100°C, 102°C, 105°C, 110°C, 115°C, or 120°C.

In one embodiment, the mixing in step (1) and step (2) is each independently performed for a period of 30-60 min, such as 30 min, 35 min, 40 min, 45 min, 50 min, 55 min, or 60 min.

In one embodiment, equipment for the granulation in step (2) comprises a twin-screw extruder.

In one embodiment, the granulation is performed at a temperature of 290-310°C, such as 290°C, 293°C, 295°C, 298°C, 300°C, 302°C, 305°C, 307°C, 309°C, or 310°C.

In a third aspect, the present application provides an application of the poly(phenylene sulfide)-based magnetic material as described in the first aspect in injection-molded magnets.

Compared with the related art, the present application has the following beneficial effects.

In the present application, the poly(phenylene sulfide)-based magnetic material is prepared by compounding the linear poly(phenylene sulfide), the magnetic powder, phenyl silicone resin, the hyperbranched poly(phenylene sulfide), and the lubricant, wherein the bonding force of the magnetic powder with the poly(phenylene sulfide) at high temperature is improved by adding the phenyl silicone resin, the structure of the linear poly(phenylene sulfide) is micro-modified by adding the hyperbranched poly(phenylene sulfide) to increase the strength and toughness of the poly(phenylene sulfide)-based magnetic material, and the fluidity is improved by adding the lubricant, so that the prepared poly(phenylene sulfide)-based magnetic material has the characteristics of high strength, good toughness, and good fluidity. The poly(phenylene sulfide)-based magnetic material has a melt flow rate of 48-420 g/10 min, a tensile strength of 58-88 MPa, an elongation at break of 0.7-1.8%, and a flexural strength of 89-138 Mpa.

Other aspects will be appreciated upon reading and understanding the detailed description.

### DETAILED DESCRIPTION

The technical solutions of the present application are further described below by specific embodiments. The person skilled in the art should understand that the embodiments are merely an aid to understanding the present application and should not be regarded as a specific limitation of the present application.

The term "parts" hereinafter refers to "parts by mass".

### Example 1

This example provides a poly(phenylene sulfide)-based magnetic material and a preparation method therefor, and the poly(phenylene sulfide)-based magnetic material comprises the following components: 13 parts of a linear poly(phenylene sulfide) (NHU PPS11200F, with a melt flow rate of 2000 g/10min measured at 316°C and 5 kg with reference to ISO 1133), 85 parts of magnetic powder (strontium ferrite magnetic powder, with an average particle size D50 of 1.9 µm measured by Fisher air permeability method), 0.5 parts of a phenyl silicone resin (2531E), 1 part of a hyperbranched poly(phenylene sulfide) (with a weight-average molecular mass of 20000), and 0.5 parts of a lubricant (high-temperature resistant lubricant MPK-03, purchased from Kyoeisha Chemical).

The above hyperbranched poly(phenylene sulfide) was prepared by the preparation method for hyperbranched poly(phenylene sulfide) disclosed in Xu R L, Liu H W, Shi W F. Photofluorescence of hyperbranched poly(phenylene sulfide) [J]. Journal of Polymer Science, Part B. Polymer Physics, 2006(5):44, wherein the hyperbranched poly(phenylene sulfide) was prepared in hexamethyl phosphoramide using 2,4-dichlorothiophenol as a raw material and potassium hydroxide as a catalyst.

The poly(phenylene sulfide)-based magnetic material is prepared as follows:
(1) 0.5 parts of a phenyl silicone resin was dissolved and diluted with 3 parts of ethyl acetate, and then mixed with 85 parts of magnetic powder, and blended at a high speed at 100°C for 50 min, and the ethyl acetate diluent was volatilized to obtain surface-treated magnetic powder; and
(2) the surface-treated magnetic powder obtained in step (1) was mixed with 13 parts of a linear poly(phenylene sulfide), 1 part of a hyperbranched poly(phenylene sulfide), and 0.5 parts of a lubricant for 30 min, and subjected to extrusion granulation with a twin-screw extruder at a granulation temperature of 300°C to obtain the poly(phenylene sulfide)-based magnetic material.

### Example 2

This example provides a poly(phenylene sulfide)-based magnetic material and a preparation method therefor, and the poly(phenylene sulfide)-based magnetic material comprises the following components: 18 parts of a linear poly(phenylene sulfide) (NHU PPS powder 10300, with a melt flow rate of 2500 g/10min measured at 316°C and 5 kg with reference to ISO 1133), 80 parts of a magnetic powder (barium ferrite magnetic powder, with an average particle size D50 of 2 µm measured by Fisher air permeability method), 0.6 parts of a phenyl silicone resin (2531E), 1 part of a hyperbranched poly(phenylene sulfide) (with a weight-average molecular mass of 30000), and 0.4 parts of a lubricant (high-temperature resistant lubricant MPK-03, purchased from Kyoeisha Chemical).

The above hyperbranched poly(phenylene sulfide) was prepared by the preparation method for hyperbranched poly(phenylene sulfide) disclosed in Xu R L, Liu H W, Shi W F. Photofluorescence of hyperbranched poly(phenylene sulfide) [J]. Journal of Polymer Science, Part B. Polymer Physics, 2006(5):44, wherein the hyperbranched poly(phenylene sulfide) was prepared in hexamethyl phosphoramide using 2,4-dichlorothiophenol as a raw material and potassium hydroxide as a catalyst.

The poly(phenylene sulfide)-based magnetic material is prepared as follows:
(1) 0.6 parts of a phenyl silicone resin was dissolved and diluted with 4 parts of ethyl acetate, and then mixed with 80 parts of magnetic powder, and blended at a high speed at 80°C for 60 min, and the ethyl acetate diluent was volatilized to obtain surface-treated magnetic powder; and
(2) the surface-treated magnetic powder obtained in step (1) was mixed with 18 parts of a linear poly(phenylene sulfide), 1 part of a hyperbranched poly(phenylene sulfide), and 0.4 parts of a lubricant for 60 min, and subjected to extrusion granulation with a twin-screw extruder at a granulation temperature of 310°C to obtain the poly(phenylene sulfide)-based magnetic material.

### Example 3

This example provides a poly(phenylene sulfide)-based magnetic material and a preparation method therefor, and the poly(phenylene sulfide)-based magnetic material comprises the following components: 10 parts of a linear poly(phenylene sulfide) (NHU PPS powder 34100, with a melt flow rate of 1500 g/10min measured at 316°C and 5 kg with reference to ISO 1133), 88 parts of a magnetic powder (samarium iron nitride magnetic powder, with an average particle size D50 of 2.2 µm measured by Fisher air permeability method), 0.3 parts of a phenyl silicone resin (2531E), 1 part of hyperbranched poly(phenylene sulfide) (with a weight-average molecular mass of 15000), and 0.7 parts of a lubricant (high-temperature resistant lubricant MPK-03, purchased from Kyoeisha Chemical).

The above hyperbranched poly(phenylene sulfide) was prepared by the preparation method for hyperbranched poly(phenylene sulfide) disclosed in Xu R L, Liu H W, Shi W F. Photofluorescence of hyperbranched poly(phenylene sulfide) [J]. Journal of Polymer Science, Part B. Polymer Physics, 2006(5):44, wherein the hyperbranched poly(phenylene sulfide) was prepared in hexamethyl phosphoramide using 2,4-dichlorothiophenol as a raw material and potassium hydroxide as a catalyst.

The poly(phenylene sulfide)-based magnetic material is prepared as follows:
(1) 0.3 parts of a phenyl silicone resin was dissolved and diluted with 6 parts of ethyl acetate, and then mixed with 88 parts of magnetic powder, and blended at a high speed at 120°C for 30 min, and the ethyl acetate diluent was volatilized to obtain surface-treated magnetic powder; and
(2) the surface-treated magnetic powder obtained in step (1) was mixed with 10 parts of a linear poly(phenylene sulfide), 1 part of a hyperbranched poly(phenylene sulfide), and 0.7 parts of a lubricant for 50 min, and subjected to extrusion granulation with a twin-screw extruder at a granulation temperature of 290°C to obtain the poly(phenylene sulfide)-based magnetic material.

### Example 4

This example provides a poly(phenylene sulfide)-based magnetic material and a preparation method therefor, which differs from Example 1 only in that the linear poly(phenylene sulfide) was adjusted to 12 parts by mass, and the hyperbranched poly(phenylene sulfide) was adjusted to 2 parts by mass, and the other raw materials, usage amounts, and preparation methods were the same as in Example 1.

### Example 5

This example provides a poly(phenylene sulfide)-based magnetic material and a preparation method therefor, which differs from Example 1 only in that the linear poly(phenylene sulfide) was adjusted to 11 parts by mass, and the hyperbranched poly(phenylene sulfide) was adjusted to 3 parts by mass, and the other raw materials, usage amounts, and preparation methods were the same as in Example 1.

### Example 6

This example provides a poly(phenylene sulfide)-based magnetic material and a preparation method therefor, which differs from Example 1 only in that the linear poly(phenylene sulfide) was adjusted to 10 parts by mass, and the hyperbranched poly(phenylene sulfide) was adjusted to 4 parts by mass, and the other raw materials, usage amounts, and preparation methods were the same as in Example 1.

### Example 7

This example provides a poly(phenylene sulfide)-based magnetic material and a preparation method therefor, which differs from Example 1 only in that the linear poly(phenylene sulfide) was adjusted to 13.5 parts by mass, and the hyperbranched poly(phenylene sulfide) was adjusted to 0.5 parts by mass, and the other raw materials, usage amounts, and preparation methods were the same as in Example 1.

### Example 8

This example provides a poly(phenylene sulfide)-based magnetic material and a preparation method therefor, which differs from Example 1 only in that the linear poly(phenylene sulfide) (NHU PPS11200F) was replaced by the same mass of the linear poly(phenylene sulfide) (NHU 3450, with a melt flow rate of 500 g/10min measured at 316°C and 5 kg with reference to ISO 1133), and the other raw materials, usage amounts, and preparation methods were the same as in Example 1.

### Example 9

This example provides a poly(phenylene sulfide)-based magnetic material and a preparation method therefor, which differs from Example 1 only in that the linear poly(phenylene sulfide) (NHU PPS11200F) was replaced by the same mass of the linear poly(phenylene sulfide) (NHU 10500, with a melt flow rate of 3000 g/10min measured at 316°C and 5 kg with reference to ISO 1133), and the other raw materials, usage amounts, and preparation methods were the same as in Example 1.

### Example 10

This example provides a poly(phenylene sulfide)-based magnetic material and a preparation method therefor, which differs from Example 1 only in that the hyperbranched poly(phenylene sulfide) (with a weight-average molecular mass of 20000) was replaced by the same mass of the hyperbranched poly(phenylene sulfide) (with a weight-average molecular mass of 40000), and the other raw materials, usage amounts, and preparation methods were the same as in Example 1.

### Example 11

This example provides a poly(phenylene sulfide)-based magnetic material and a preparation method therefor, which differs from Example 1 only in that the phenyl silicone resin was adjusted to 0.1 parts by mass, and the linear poly(phenylene sulfide) was adjusted to 13.4 parts by mass, and the other raw materials, usage amounts, and preparation methods were the same as in Example 1.

### Example 12

This example provides a poly(phenylene sulfide)-based magnetic material and a preparation method therefor, which differs from Example 1 only in that the phenyl silicone resin was adjusted to 1 part by mass, and the linear poly(phenylene sulfide) was adjusted to 12.5 parts by mass, and the other raw materials, usage amounts, and preparation methods were the same as in Example 1.

### Comparative Example 1

This comparative example provides a poly(phenylene sulfide)-based magnetic material and a preparation method therefor, which differs from Example 1 only in that the phenyl silicone resin was not added, and the linear poly(phenylene sulfide) was adjusted to 13.5 parts by mass; the preparation method did not comprise step (1), and the surface-treated magnetic powder in step (2) was replaced by 85 parts of magnetic powder. The other raw materials, usage amounts, and preparation methods were the same as in Example 1.

### Comparative Example 2

This comparative example provides a poly(phenylene sulfide)-based magnetic material and a preparation method therefor, which differs from Example 1 only in that no hyperbranched poly(phenylene sulfide) was added, and the linear poly(phenylene sulfide) was adjusted to 14 parts by mass. The other raw materials, usage amounts, and preparation methods were the same as in Example 1.

### Comparative Example 3

This comparative example provides a poly(phenylene sulfide)-based magnetic material and a preparation method therefor, which differs from Example 5 only in that the phenyl silicone resin was replaced by the same mass of a silane coupling agent KH550. The other raw materials, usage amounts, and preparation methods were the same as in Example 5.

### Comparative Example 4

This comparative example provides a poly(phenylene sulfide)-based magnetic material and a preparation method therefor, which differs from Example 5 only in that the hyperbranched poly(phenylene sulfide) was replaced by the same mass of the elastomer polyurethane (with a weight-average molecular mass of 20000, BASF SP9324, Germany). The other raw materials, usage amounts, and preparation methods were the same as in Example 5.

### Comparative Example 5

This comparative example provides a poly(phenylene sulfide)-based magnetic material and a preparation method therefor, which differs from Example 5 only in that the phenyl silicone resin was replaced by the same mass of a silane coupling agent KH550, the hyperbranched poly(phenylene sulfide) was replaced by the same mass of the elastomer polyurethane (with a weight-average molecular mass of 20000, BASF SP9324, Germany), no lubricant was added, and the magnetic powder was 85.5 parts by mass. The other raw materials, usage amounts, and preparation methods were the same as in Example 5.

The poly(phenylene sulfide)-based magnetic materials provided in the examples and comparative examples were subjected to the following performance tests.
(1) Flowability: the melt flow rate in each example and comparative example was tested at 330°C and a pressure of 10 kg with reference to ISO 1133.
(2) Mechanical properties: the poly(phenylene sulfide)-based magnetic materials were subjected to injection-molding at 330°C to form dumbbell-shaped strength samples and short strips, and then tested for tensile strength and elongation at break with reference to GB/T 1040-1992 by using an Instron 6633 universal testing machine, and tested for flexural strength with reference to GB/T 9341-2008.

The test results are shown in Table 1.

**Table 1**

| | Melt flow rate (g/10min) | Tensile strength (MPa) | Elongation at break (%) | Flexural strength (MPa) |
|---|---|---|---|---|
| Example 1 | 150 | 72 | 1.03 | 112 |
| Example 2 | 420 | 69 | 1.15 | 109 |
| Example 3 | 200 | 58 | 1.8 | 95 |
| Example 4 | 180 | 79 | 1.07 | 116 |
| Example 5 | 280 | 88 | 1.25 | 138 |
| Example 6 | 320 | 75 | 0.98 | 110 |
| Example 7 | 105 | 70 | 0.8 | 108 |
| Example 8 | 89 | 74 | 1.03 | 115 |
| Example 9 | 180 | 68 | 0.97 | 103 |
| Example 10 | 78 | 62 | 0.92 | 105 |
| Example 11 | 84 | 59 | 0.7 | 89 |
| Example 12 | 48 | 72 | 1.06 | 116 |
| Comparative Example 1 | 30 | 47 | 0.6 | 79 |
| Comparative Example 2 | 35 | 59 | 0.67 | 85 |
| Comparative Example 3 | 100 | 69 | 0.90 | 106 |
| Comparative Example 4 | 60 | 61 | 1.18 | 92 |
| Comparative Example 5 | 25 | 54 | 0.95 | 79 |

According to the test results in Table 1, the poly(phenylene sulfide)-based magnetic materials provided in Examples 1-12 have a melt flow rate of 48-420 g/10min, a tensile strength of 58-88 MPa, an elongation at break of 0.7-1.8%, and a flexural strength of 89-138 MPa. It can be seen from the comparison of Example 1 and Examples 4-6 that as the parts by mass of the hyperbranched poly(phenylene sulfide) increase, the melt flow rate increases.

Compared to Example 1, if the parts by mass of the hyperbranched poly(phenylene sulfide) are too small (Example 7), the prepared poly(phenylene sulfide)-based magnetic material will have a decreased melt flow rate, poor fluidity, and decreased tensile strength and flexural strength, which proves that the prepared poly(phenylene sulfide)-based magnetic material can have a better performance by using the hyperbranched poly(phenylene sulfide) within a specific range of parts by mass.

Compared to Example 1, if the melt flow rate of the linear poly(phenylene sulfide) is decreased (Example 8), the prepared poly(phenylene sulfide)-based magnetic material will have a decreased melt flow rate and poor fluidity; if the melt flow rate of the linear poly(phenylene sulfide) is increased (Example 9), the tensile strength and flexural strength will be decreased, which proves that the poly(phenylene sulfide)-based magnetic material prepared from the linear poly(phenylene sulfide) with the melt flow rate of 1500-2500 g/10min can have a better performance.

Compared to Example 1, if the weight-average molecular mass of the hyperbranched poly(phenylene sulfide) is too large (Example 10), the prepared poly(phenylene sulfide)-based magnetic material will have a decreased melt flow rate, poor fluidity, and decreased tensile strength and flexural strength, which proves that the poly(phenylene sulfide)-based magnetic material prepared from the hyperbranched poly(phenylene sulfide) with a specific range of weight-average molecular mass can have a better performance.

Compared to Example 1, if the parts by mass of the phenyl silicone resin are too small (Example 11), the magnetic powder cannot be coated completely, the prepared poly(phenylene sulfide)-based magnetic material will have a decreased melt flow rate, poor fluidity, and decreased tensile strength and flexural strength; if the parts by mass of the phenyl silicone resin are too large (Example 12), the viscosity of the prepared poly(phenylene sulfide)-based magnetic material will increase, resulting in a decreased melt flow rate and poor fluidity, which proves the poly(phenylene sulfide)-based magnetic material prepared from the phenyl silicone resin with a specific range of part by mass can have a better performance.

Compared to Example 1, if the phenyl silicone resin is not added (Comparative Example 1), the binding force between the magnetic powder and the linear poly(phenylene sulfide) will be poor, the prepared poly(phenylene sulfide)-based magnetic material will have a decreased melt flow rate, and decreased tensile strength and flexural strength.

Compared to Example 1, if the hyperbranched poly(phenylene sulfide) is not added (Comparative Example 2), the prepared poly(phenylene sulfide)-based magnetic material will have a decreased melt flow rate, and decreased tensile strength and flexural strength.

Compared to Example 5, if the phenyl silicone resin is replaced by the same mass of the silane coupling agent KH550 (Comparative Example 3), the prepared poly(phenylene sulfide)-based magnetic material will have a decreased melt flow rate, and decreased tensile strength and flexural strength, because under the granulation temperature exceeding 300°C, which is determined by the high melting point of poly(phenylene sulfide), the conventional silane coupling agent is easy to be decomposed and deactivated. As a result, the performance of poly(phenylene sulfide)-based magnetic material is decreased.

Compared to Example 5, if the hyperbranched poly(phenylene sulfide) is replaced by the same mass of the elastomer polyurethane (Comparative Example 4), the prepared poly(phenylene sulfide)-based magnetic material will have a decreased melt flow rate, and decreased tensile strength and flexural strength.

Compared to Example 5, if the phenyl silicone resin is replaced by the same mass of the silane coupling agent KH550 and meanwhile the hyperbranched poly(phenylene sulfide) is replaced by the same mass of elastomer polyurethane, and also no lubricant is added (Comparative Example 5), the prepared poly(phenylene sulfide)-based magnetic material will have a decreased melt flow rate, and decreased tensile strength and flexural strength..

The applicant declares that a poly(phenylene sulfide)-based magnetic material, a preparation method therefor, and an application thereof in the present application are illustrated by the above examples in the present application, but the present application is not limited to the above examples, that is, the present application does not necessarily rely on the above examples to be implemented. Those skilled in the art should understand that any improvement of the present application, the equivalent substitution of raw materials, the addition of auxiliary ingredients, and the selection of specific methods of the products in the present application shall fall within the protection scope and disclosure scope of the present application.

## Claims

1. A poly(phenylene sulfide)-based magnetic material, which comprises a linear poly(phenylene sulfide), a magnetic powder, a phenyl silicone resin, a hyperbranched poly(phenylene sulfide), and a lubricant.

2. The poly(phenylene sulfide)-based magnetic material according to claim 1, wherein the linear poly(phenylene sulfide) has a melt flow rate of 500-3000 g/10min, and optionally, 1500-2500 g/10min.

3. The poly(phenylene sulfide)-based magnetic material according to claim 1 or 2, wherein the magnetic powder comprises ferrite magnetic powder and/or rare earth magnetic powder.

4. The poly(phenylene sulfide)-based magnetic material according to claim 3, wherein the ferrite magnetic powder comprises strontium ferrite magnetic powder and/or barium ferrite magnetic powder.

5. The poly(phenylene sulfide)-based magnetic material according to claim 3 or 4, wherein the rare earth magnetic powder comprises samarium iron nitride magnetic powder.

6. The poly(phenylene sulfide)-based magnetic material according to any one of claims 1-5, wherein the phenyl silicone resin comprises a phenyl silicone resin containing ethoxy and methyl.

7. The poly(phenylene sulfide)-based magnetic material according to any one of claims 1-6, wherein the hyperbranched poly(phenylene sulfide) is prepared by monomer polymerization of dichlorothiophenol or dichlorothiophenol.

8. The poly(phenylene sulfide)-based magnetic material according to any one of claims 1-7, wherein the hyperbranched poly(phenylene sulfide) has a weight-average molecular mass of 15000-30000.

9. The poly(phenylene sulfide)-based magnetic material according to any one of claims 1-8, wherein the lubricant comprises a high temperature-resistant amide lubricant.

10. The poly(phenylene sulfide)-based magnetic material according to any one of claims 1-9, wherein based on a total mass of the poly(phenylene sulfide)-based magnetic material being 100 parts, the linear poly(phenylene sulfide) is 10-18 parts by mass;
optionally, the magnetic powder is 80-100 parts by mass, optionally 80-88 parts by mass;
optionally, the phenyl silicone resin is 0.3-0.6 parts by mass;
optionally, the hyperbranched poly(phenylene sulfide) is 1-4 parts by mass;
optionally, the lubricant is 0.5-1.0 parts by mass.

11. A preparation method for the poly(phenylene sulfide)-based magnetic material according to any one of claims 1-10, which comprises the following steps:
(1) mixing a magnetic powder and a phenyl silicone resin to obtain a surface-treated magnetic powder; and
(2) mixing the surface-treated magnetic powder obtained in step (1), a linear poly(phenylene sulfide), a hyperbranched poly(phenylene sulfide), and a lubricant, and performing granulation to obtain the poly(phenylene sulfide)-based magnetic material.

12. The preparation method according to claim 11, wherein the mixing in step (1) is to mix the magnetic powder and the phenyl silicone resin diluted with a solvent.

13. The preparation method according to claim 12, wherein the solvent comprises ethyl acetate and/or ethyl formate.

14. The preparation method according to any one of claims 11-13, wherein a mass ratio of the phenyl silicone resin to the solvent is 1:3-1:6;
optionally, the mixing in step (1) and step (2) is each independently performed at a temperature of 80-120°C;
optionally, the mixing in step (1) and step (2) is each independently performed for a period of 30-60 min;
optionally, equipment for the granulating in step (2) comprises a twin-screw extruder;
optionally, the granulating is performed at a temperature of 290-310°C.

15. An application of the poly(phenylene sulfide)-based magnetic material according to any one of claims 1-10 in injection-molded magnets.
